(19) Europäisches Patentamt
European Patent Office
Office européen des brevets

(11) EP 1 992 509 A1

(12) **EUROPEAN PATENT APPLICATION**
published in accordance with Art. 158(3) EPC

(43) Date of publication:
**19.11.2008 Bulletin 2008/47**

(21) Application number: **07737701.8**

(22) Date of filing: **02.03.2007**

(51) Int Cl.:
***B60J 1/02*** (2006.01) ***B60J 1/00*** (2006.01)
***B60J 10/02*** (2006.01) ***C08L 51/00*** (2006.01)
***C08L 55/00*** (2006.01) ***C09K 3/10*** (2006.01)

(86) International application number:
**PCT/JP2007/054080**

(87) International publication number:
**WO 2007/102437 (13.09.2007 Gazette 2007/37)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **03.03.2006 JP 2006057992**

(71) Applicants:
- **Asahi Glass Company, Limited**
  **Chiyoda-ku**
  **Tokyo 100-8405 (JP)**
- **NOF Corporation**
  **Ebisu 4-chome, Shibuya-ku**
  **Tokyo 150-6019 (JP)**

(72) Inventors:
- **MASAKI, Yuuji**
  **Tokyo 1008405 (JP)**
- **ATSUMI, Toshihiro**
  **Tokyo 1008405 (JP)**
- **USAMI, Satoshi**
  **Chita-gun, Aichi 4702353 (JP)**
- **TAMURA, Toru**
  **Handa-shi, Aichi 4750855 (JP)**
- **SUGIURA, Motoyuki**
  **Anjo-shi, Aichi 4460051 (JP)**

(74) Representative: **Müller-Boré & Partner**
**Patentanwälte**
**Grafinger Strasse 2**
**81671 München (DE)**

(54) **GAP CLOGGING MEMBER FOR VEHICLES, AND PLATE-LIKE BODY FOR VEHICLE WINDOWS WITH GAP CLOGGING MEMBER USING THE SAME**

(57) To provide a gap-filling member for vehicles using an olefinic thermoplastic elastomer, which has a wide range for regulating a gloss value representing gloss, can provide a high initial gloss value and is excellent also in mechanical properties such as scratch resistance, chemical resistance and adhesion, and recycling properties.

A gap-filling member for vehicles to be mounted on a peripheral portion of a plate-like body for vehicle windows, to fill a gap between the plate-like body for vehicle windows and an opening of a vehicle body, said gap-filling member being made of an olefinic thermoplastic elastomer which comprises:
an olefinic graft copolymer comprising an olefinic polymer or olefinic copolymer segment formed from an $\alpha$-olefin monomer, and a vinyl copolymer segment, wherein particles of one segment are dispersed in the other segment, and the particles have an average diameter of from 0.01 to 1 $\mu$m; and
an acrylic rubber obtained by copolymerizing a monomer mixture comprising, as the main components, methoxyethyl acrylate, an alkyl acrylate, acrylonitrile and allyl methacrylate.

Fig. 1

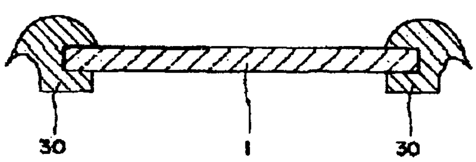


EP 1 992 509 A1

## Description

### TECHNICAL FIELD

The present invention relates to a gap-filling member made of an olefinic thermoplastic elastomer to be mounted on a peripheral portion of a plate-like body for windows to be used for e.g. vehicle windows, to fill a gap between the plate-like body for vehicle windows and an opening of a vehicle body, and a plate-like body for vehicle windows provided with a gap-filling member, using the same.

### BACKGROUND ART

In recent years, a black soft vinyl chloride resin (hereinafter referred to also as PVC) has been used in many cases for a gap-filling member such as a gasket to fill a gap between a windshield, side window glass or the like as a window of a vehicle such as an automobile and the vehicle body. However, PVC has problems such that during its use for a long time, the surface is likely to undergo color fading or the impact resistance at a low temperature tends to decrease. Further, PVC has such a problem that the specific gravity is at least 1.1 and it tends to be a factor to hinder weight reduction, and at the time of incineration, it generates a corrosive gas, whereby it tends to be hardly recycled for use. Under these circumstances, along with increasing consciousness about environmental problems, a demand for an environmentally friendly material is increasing.

Under the circumstances, it is studied to use a thermoplastic elastomer (hereinafter referred to also as TPE) as a material for the gap-filling member as a substitute for PVC (e.g. Patent Document 1). Particularly, an olefinic TPE has superior properties such that the mechanical properties, chemical resistance and molding processability are high, the specific gravity is low as compared with PVC, and it is excellent in recycling properties since it contains no chlorine (e.g. Patent Document 2).

On the other hand, a demand for an exterior appearance of a vehicle such as an automobile is increasing year after year. With respect to a gap-filling member such as a gasket, a demand for forming an integral exterior appearance by adjusting the gloss to the vehicle body and glass and to maintain such an integral exterior appearance during use for a long period of time.

However, with conventional olefinic TPE, it is difficult to intensify the initial gloss after molding, and even if the gloss can be intensified, scratches or surface deterioration tends to be distinct, and there has been a problem such that the initial gloss can hardly be maintained. Therefore, when it is used for e.g. a gasket for an automobile, there have been problems such that during use for a long period of time the gloss tends to decrease, and scratches are likely to form, whereby the gloss tends to be weak, or only the gap-filling member looks different in the gloss from the vehicle body or glass, whereby the degree of perfection of the exterior appearance tends to deteriorate. Further, conventional olefinic TPE also has had a problem such that the adhesion to metal or glass is poor, whereby bonding of the gap-filling member tends to be difficult.

Patent Document 1: JP-A-2004-58683

Patent Document 2: JP-A-2004-2651

### DISCLOSURE OF THE INVENTION

### OBJECT TO BE ACCOMPLISHED BY THE INVENTION

The present invention has been made to solve the above-mentioned problems and is capable of presenting a gap-filling member which contributes weight reduction of vehicles, has high mechanical properties, molding processability and recycling properties, has a wide range for adjusting the initial gloss value representing the gloss immediately after molding and has a high initial gloss value which has been heretofore difficult to accomplish. Further, it is an object of the present invention to provide a gap-filling member for vehicles using an olefinic TPE excellent also in the scratch resistance, chemical resistance and adhesion, and a plate-like body for windows, provided with such a gap-filling member.

### MEANS TO ACCOMPLISH THE OBJECTS

In a first embodiment, the present invention provides a gap-filling member for vehicles to be mounted on a peripheral portion of a plate-like body for vehicle windows, to fill a gap between the plate-like body for vehicle windows and an opening of a vehicle body, said gap-filling member being made of an olefinic thermoplastic elastomer which comprises:

an olefinic graft copolymer comprising an olefinic polymer or olefinic copolymer segment formed from an α-olefin monomer, and a vinyl copolymer segment, wherein particles of one segment are dispersed in the other segment, and the particles have an average diameter of from 0.01 to 1 μm; and

an acrylic rubber obtained by copolymerizing a monomer mixture comprising, as the main components, methoxyethyl acrylate, an alkyl acrylate, acrylonitrile and allyl methacrylate.

The above gap-filling member has mechanical properties sufficient for a gasket for vehicles and further has a larger range for adjustment of the initial gloss value representing the gloss immediately after molding, as compared with a conventional gap-filling member made of an olefinic TPE and thus is capable of providing a desired gloss. Namely, it is possible to provide gap-filling members having various gloss levels which have been difficult to realize with conventional olefinic TPE, particularly a gap-filling member for vehicles, which has a particularly large initial gloss value and presents a strong gloss and high durability.

Further, it is excellent also in the scratch resistance and chemical resistance as compared with a conventional gap-filling member made of an olefinic TPE, and a decrease in the gloss value is little even by its use for a long period of time. Accordingly, it becomes possible to optionally adjust the gloss of the gap-filling member with the vehicle body or glass, whereby the degree of freedom in the ornamental design increases, and it becomes possible to present an exterior appearance with a high degree of perfection and compatibility. Further, as the durability of the gap-filling member is high, it is easy to maintain the characteristics of the exterior appearance for a long period of time. Further, its adhesive property is high and it is possible to use various types of adhesives, and accordingly, it is possible to provide a gap-filling member for vehicles which is friendly to the environment and has a high recycling property.

In a second embodiment, the present invention provides a gap-filling member for vehicles to be mounted on a peripheral portion of a plate-like body for vehicle windows, to fill a gap between the plate-like body for vehicle windows and an opening of a vehicle body, said gap-filling member being made of an olefinic thermoplastic elastomer obtained by melt-kneading:

an olefinic graft precursor of a structure wherein a copolymer of a vinyl monomer with a radical polymerizable organic peroxide is dispersed, with an average diameter of from 0.01 to 1 μm, in an olefinic polymer or olefinic copolymer formed from an α-olefin monomer;

an acrylic rubber obtained by copolymerizing a monomer mixture comprising, as the main components, methoxyethyl acrylate, an alkyl acrylate, acrylonitrile and allyl methacrylate; and

a crosslinking agent.

The gap-filling member of the above second embodiment is made of an olefinic TPE obtained by melt-kneading the olefinic graft precursor, the acrylic rubber and the crosslinking agent, and the olefinic TPE obtained by using the olefinic graft precursor has high compatibility with acryl and olefin and is excellent in the mechanical properties and moldability. Further, the range for adjusting the initial gloss value is large, and it is possible to present a desired gloss, and it is possible to present gap-filling members having various gloss levels, particularly a gap-filing member for vehicles which has a large initial gloss and has a strong gloss and high durability. Consequently, it is excellent also in the scratch resistance, chemical resistance and adhesion, and a decrease in gloss is little even in its use for a long period of time. As a result, it becomes possible to optionally adjust the gloss of the gap-filling member with the vehicle body or glass, whereby the degree of freedom in the ornamental design increases, and it has become possible to provide an exterior appearance with a high degree of perfection and integral impression. Further, as the durability of the gap-filling member is high, it is easy to maintain the characteristics of the exterior appearance for a long period of time.

In a third embodiment, the present invention provides the gap-filling member for vehicles according to the first or second embodiment wherein the initial gloss of the gap-filling member for vehicles is at least 15.

The gap-filling member of the above third embodiment is capable of providing an exterior appearance with higher integral impression as a vehicle, since a difference in gloss on the exterior appearance from e.g. glass or a steel plate for an automobile is small.

In a fourth embodiment, the present invention provides the gap-filling member for vehicles according to the first, second or third embodiment, wherein the gap-filling member for vehicles is used for a window of automobiles.

The gap-filling member of the above fourth embodiment is capable of presenting a gap-filling member for automobiles which is provided with the above-described characteristics, has a wide range for adjusting the gloss value and provides a strong gloss which has not been accomplished heretofore and high durability.

In a fifth embodiment, the present invention provides a plate-like body for vehicle windows, provided with a gap-filling member for vehicles, which has a gap-filling member made of an olefinic TPE provided on the peripheral portion of the plate-like body for vehicle windows, wherein the gap-filling member made of an olefinic TPE is the gap-filling member for vehicles as defined in the first, second, third or fourth embodiment.

With the plate-like body for vehicle windows, provided with a gap-filling member according to the fifth embodiment, in addition to the effects of the above-described embodiments, it is possible to fix the gap-filling member to the plate-like body for vehicle windows to form an assembled component prior to the step of assembling a vehicle, so that the assembled component can be attached to the vehicle body. Thus, the number of components in the step of assembling a vehicle can be reduced, and it becomes possible to realize a simple and efficient step for assembling the vehicle main body.

In a sixth embodiment, the present invention provides a plate-like body for vehicle windows, provided with a gap-filling member, which has the gap-filling member made of an olefinic TPE integrally molded on the peripheral portion of the plate-like body for vehicle windows, wherein the gap-filing member made of an olefinic TPE is the gap-filling member for vehicles as defined in the first, second, third or fourth embodiment.

With the plate-like body for vehicle windows, provided with a gap-filling member according to the sixth embodiment, in addition to the effects of the above-described embodiments, at the time of molding the gap-filling member, the plate-like body for vehicle windows and the gap-filling member are integrated to be an assembled component, whereby the process step will be simplified, and the plate-like body for vehicle windows, provided with a gap-filing member, can be formed easily, economically with high precision. As a result, the number of components in the step for assembling a vehicle can be reduced, and it is possible to realize a simple, efficient and highly precise step for assembling a vehicle body.

## EFFECT OF THE INVENTION

As the gap-filling member is formed by using the olefinic TPE of the present invention, the gap-filling member for vehicles of the present invention is not only light in weight and excellent in the mechanical properties and molding processability but also capable of presenting a desired gloss with a wide range for adjusting the gloss value representing the gloss, and further it is excellent in scratch resistance and chemical resistance. Accordingly, it is possible to provide gap-filling members having various gloss levels which have been difficult to realize with conventional TPE, particularly a gap-filling member for vehicles having a strong gloss and high durability. Further, it has a high adhesive property, and various types of adhesives can be utilized, whereby it is possible to provide a gap-filling member for vehicles, which is environmentally friendly and has a high recycling property.

Further, with the plate-like body for windows using the gap-filling member of the present invention, in addition to the above-described effects, the number of components can be reduced in the process for assembling the vehicle body, and it is possible to provide a plate-like body for vehicle windows, provided with a gap-filling member, which can be easily attached to the vehicle body.

## BRIEF DESCRIPTION OF DRAWINGS

Fig. 1 is a cross-sectional view illustrating an example of the plate-like body for vehicle windows, provided with a gap-filling member according to the present invention.

Fig. 2 is a cross-sectional view illustrating an example of the process for producing a plate-like body for vehicle windows, provided with a gap-filling member according to the present invention.

## MEANINGS OF SYMBOLS

1: Glass plate (plate-like body for vehicle windows)
2: Mold
10: Cavity
21: Upper mold
22: Lower mold
23: Spool
30: Gasket (gap-filling member)

## BEST MODE FOR CARRYING OUT THE INVENTION

Now, the present invention will be described in further detail. As shown in Fig. 1, the plate-like body for vehicle windows, provided with a gap-filling member is one having a gasket (a gap-filling member) 30 fixed to each end of a glass plate (a plate-like body for vehicle windows) 1 via an adhesive or a primer (not shown). The gasket 30 in the present invention may be a gasket 30 integrally formed with the plate-like body 1 for vehicle windows, or a gasket 30 to

be attached to the plate-like body for vehicle windows. Further, it may be a gasket 30 preliminarily attached to the plate-like body 1 for vehicle windows. Further, such a gasket 30 may be one molded by any molding method such as injection molding or extrusion molding. Further, the gasket 30 may have any shape, and its contact surface with the glass plate 1 may be one side or both sides and may include the edge surface.

Now, with reference to Fig. 2, an example of the method for producing a plate-like body for vehicle windows, provided with a gap-filing member by using an olefinic TPE of the present invention, will be described. The peripheral portion of a glass plate 1 is mounted on a lower mold 22 of a mold 2, and the glass plate 1 is pinched by the upper mold 21, to form a cavity 10 by the inner wall of the mold 2 and the peripheral portion of the glass plate 1. Separately, an olefinic graft copolymer and an acrylic rubber, etc., are melt-kneaded to form an olefinic TPE. Then, such olefinic TPE is injected from a spool 23 of the mold 2 into the cavity 10 under a pressure at a level not to break the glass plate, and solidified. The injection temperature at that time is preferably from 200 to 235°C, more preferably from 210 to 230°C. Further, it is preferred to form an adhesive layer at the peripheral portion of the glass plate 1 by preliminarily applying an adhesive. Thereafter, the glass plate 1 is taken out from the mold 2 to obtain a plate-like body for vehicles, provided with a gap-filling member of the present invention as shown in Fig. 1.

Here, an example is shown wherein the gap-filling member is integrally molded with a plate-like body for vehicles. However, the gap-filling member of the present invention may be formed by extrusion molding by using the above-mentioned olefinic TPE material comprising the olefinic graft copolymer and the acrylic rubber. In such a case, the extrusion molding can be carried out by using a die having an opening shape substantially the same as the cross section of the gap-filling member. At that time, it may be integrated with a plate-like body for vehicles immediately after the extrusion molding, or may be directly integrated by carrying out the extrusion molding on a plate-like body for vehicles.

Now, the olefinic TPE in the present invention will be described.

Firstly, the olefinic graft copolymer in the present invention will be described.

The olefinic graft copolymer of the present invention comprises an olefinic (co)polymer segment formed from an α-olefin monomer and a vinyl copolymer segment, wherein particles of one segment are dispersed in the other segment to form a dispersed phase as fine particles with an average diameter of from 0.01 to 1 μm, preferably from 0.1 to 1 μm. If the average diameter of the dispersed particles is less than 0.01 μm or more than 1 μm, the compatibility when blended with the acrylic rubber, tends to be inadequate, thus leading to deterioration of the appearance or mechanical properties, such being undesirable.

Now, the olefinic polymer segment or olefinic copolymer segment (hereinafter sometimes generally referred to as the olefinic (co)polymer segment) will be described.

The olefinic (co)polymer segment is a homopolymer of an α-olefin monomer or a copolymer of two or more α-olefin monomers, obtainable by high pressure radical polymerization, moderate pressure ion polymerization or the like.

Such α-olefin monomers may, for example, ethylene, propylene, 1-butene, 1-pentene, 1-hexene and 4-methyl-1-pentene. Among them, ethylene and propylene are preferred. Specific examples of the olefinic (co)polymer include, for example, low density polyethylene, ultra low density polyethylene, super-ultra low density polyethylene, low molecular weight polyethylene, polypropylene and an ethylene/propylene copolymer. Among them, preferred from the viewpoint of the oil resistance and mechanical properties are polypropylene and an ethylene/propylene copolymer.

Particularly preferred is homopolypropylene or an oil resistant ethylene/propylene copolymer. The oil resistant ethylene/propylene copolymer is an ethylene/propylene block copolymer having an ethylene content of at most 10 wt%, or an ethylene/propylene random copolymer having an ethylene content of at most 5 wt%.

Such olefinic (co)polymers may be used as mixed. The weight average molecular weight of the olefinic (co) polymer is preferably from 5,000 to 3,000,000, more preferably from 10,000 to 2,000,000, further preferably from 50,000 to 1,000,000. If the weight average molecular weight is less than 5,000 or more than 3,000,000, the mechanical properties and moldability of the olefinic TPE tend to deteriorate.

Now, the vinyl copolymer segment will be described.

A vinyl monomer as the main material to form the vinyl copolymer segment is preferably one having good compatibility with the acrylic rubber. Specifically, a vinyl aromatic such as styrene, methylstyrene, dimethylstyrene, ethylstyrene, isopropylstyrene or chlorostyrene; an α-substituted styrene such as α-methylstyrene or α-ethylstyrene; a (meth)acrylate monomer such as methyl (meth)acrylate, ethyl (meth)acrylate, propyl (meth)acrylate, butyl (meth)acrylate, pentyl (meth)acrylate, hexyl (meth)acrylate, heptyl (meth)acrylate, 2-ethylhexyl (meth)acrylate, octyl (meth)acrylate, nonyl (meth)acrylate, decyl (meth)acrylate or dodecyl (meth)acrylate; an alkoxyalkyl acrylate monomer such as ethoxyethyl acrylate, methoxyethyl acrylate, butoxyethyl acrylate or ethoxypropyl acrylate; a vinyl cyanide monomer such as acrylonitrile or methacrylonitrile; and a hydroxyl group-containing monomer such as hydroxyethyl (meth)acrylate or hydroxypropyl (meth)acrylate, may, for example, be mentioned. They may be used alone or in combination as a mixture of two or more of them.

Among them, particularly preferred is styrene, ethyl acrylate, butyl acrylate, methoxyethyl acrylate, acrylonitrile or hydroxypropyl (meth)acrylate.

Further, in the vinyl copolymer, a polyfunctional monomer or a monomer having a crosslinkable functional

group may be copolymerized together with the above-mentioned vinyl monomer. The monomer having a crosslinkable functional group may specifically be e.g. an active chlorine-containing monomer, an epoxy group-containing monomer, a carboxyl group-containing monomer or an unsaturated group-containing monomer.

The number average polymerization degree of the vinyl copolymer to form the vinyl copolymer segment of the present invention is preferably from 5 to 10,000, more preferably from 10 to 5,000, most preferably from 100 to 2,000. If the number average polymerization degree is less than 5, it is possible to improve the moldability of the olefinic TPE of the present invention, but the compatibility with the acrylic rubber tends to deteriorate, and the appearance tends to deteriorate. Further, if the number average polymerization degree exceeds 10,000, the melt viscosity tends to be high, and the moldability tends to deteriorate, or the surface gloss tends to deteriorate.

The proportion of the olefinic (co)polymer segment to be formed by the α-olefin monomer, contained in the olefinic graft copolymer of the present invention is preferably from 5 to 95 wt%, more preferably from 20 to 90 wt%, most preferably from 30 to 80 wt%. Accordingly, the proportion of the vinyl copolymer segment is preferably from 95 to 5 wt%, more preferably from 80 to 10 wt%, most preferably from 70 to 20 wt%.

If the proportion of the olefinic (co)polymer segment to be formed from an α-olefin monomer is less than 5 wt%, the effect to improve the moldability tends to be inadequate. On the other hand, if the proportion of the olefinic (co) polymer to be formed from an α-olefin monomer exceeds 95 wt%, although the effect to improve the moldability is obtainable, the compatibility with the acrylic rubber tends to deteriorate, and the mechanical properties tend to deteriorate.

The method for producing the olefinic graft copolymer of the present invention is not particularly limited. However, it is preferred to use the following olefinic graft precursor.

Now, the olefinic graft precursor will be described.

The olefinic graft precursor to be used in the present invention has a structure wherein a copolymer of a vinyl monomer with a radical polymerizable organic peroxide (hereinafter sometimes referred to also as a vinyl copolymer having a peroxide bond) is dispersed, with an average diameter of from 0.01 to 1 μm, preferably from 0.1 to 1 μm, in an olefinic (co)polymer formed from the above α-olefinic monomer.

The radical polymerizable organic peroxide to be used in the present invention is a monomer having an ethylenic unsaturated group and a peroxide-bonding group. It is preferably one represented by the following formula (1) or (2).

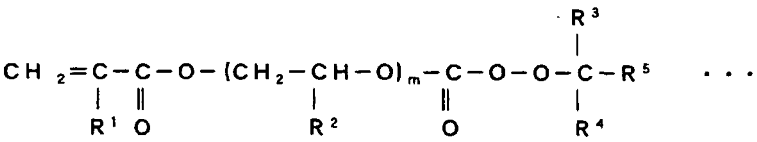

· · · (1)

In the formula (1), $R^1$ is a hydrogen atom or a $C_{1-2}$ alkyl group, $R^2$ is a hydrogen atom or a methyl group, each of $R^3$ and $R^4$ is a $C_{1-4}$ alkyl group, $R^5$ is a $C_{1-12}$ alkyl group, a phenyl group, an alkyl-substituted phenyl group or a $C_{3-12}$ cycloalkyl group, and m is 1 or 2.

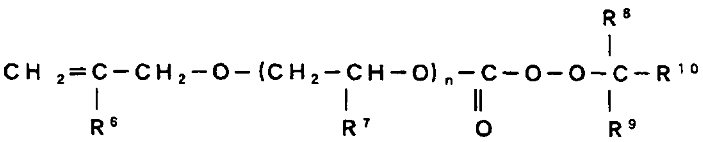

· · · (2)

In the formula (2), $R^6$ is a hydrogen atom or a $C_{1-4}$ alkyl group, $R^7$ is a hydrogen atom or a methyl group, each of $R^8$ and $R^9$ is a $C_{1-4}$ alkyl group, $R^{10}$ is a $C_{1-12}$ alkyl group, a phenyl group, an alkyl-substituted phenyl group or a $C_{3-12}$ cycloalkyl group, and n is 0, 1 or 2.

Among them, a radical polymerizable organic peroxide such as tert-butylperoxyacryloyloxyethyl carbonate, tert-butylperoxymethacryloyloxyethyl carbonate, tert-butylperoxyallyl carbonate or tert-butylperoxymethallyl carbonate, is preferred.

Further, the vinyl monomer to be copolymerized with the radical polymerizable organic peroxide to form a vinyl copolymer, may be the same one as the vinyl monomer being the main material to form the above-mentioned vinyl copolymer segment, and, for example, styrene, ethyl acrylate, butyl acrylate, methoxyethyl acrylate, acrylonitrile or hydroxypropyl (meth)acrylate is preferred. These monomers may be used alone or in combination as a mixture of two or more of them.

The proportion of the olefinic (co)polymer moiety to be formed from an α-olefin monomer, contained in the olefinic graft precursor of the present invention is preferably from 5 to 95 wt%, more preferably from 20 to 90 wt%, most preferably from 30 to 80 wt%. Accordingly, the proportion of the vinyl copolymer is preferably from 95 to 5 wt%, more preferably from 80 to 10 wt%, most preferably from 70 to 20 wt%. If the proportion of the olefinic (co)polymer formed from an α-olefin monomer is less than 5 wt%, the effect to improve the moldability tends to be inadequate, and if the proportion of the olefinic (co)polymer formed from an α-olefin monomer exceeds 95 wt%, although the effect to improve the moldability may be obtained, the compatibility with the acrylic rubber tends to deteriorate, and the mechanical properties tend to deteriorate.

The number average polymerization degree of the vinyl copolymer having a peroxide bond of the present invention is preferably from 5 to 10,000, more preferably from 10 to 5,000, most preferably from 100 to 2,000. If the number average polymerization degree is less than 5, although it is possible to improve the moldability of the olefinic TPE of the present invention, the compatibility with the acrylic rubber tends to deteriorate, and the appearance tends to deteriorate. Further, if the number average polymerization degree exceeds 10,000, the melt viscosity tends to be high, the moldability tends to deteriorate or the surface gloss tends to deteriorate.

Now, the acrylic rubber in the present invention will be described.

The acrylic rubber to be used in the present invention is a rubber obtained by copolymerizing a monomer mixture comprising, as the main components, preferably from 10 to 90 wt%, more preferably from 15 to 80 wt% of methoxyethyl acrylate, preferably from 4 to 85 wt%, more preferably from 20 to 80 wt% of an alkyl acrylate, preferably from 4 to 15 wt%, more preferably from 6 to 12 wt% of acrylonitrile, and preferably from 0.1 to 10 wt%, more preferably from 0.1 to 5 wt% of allyl methacrylate. The above proportions are the amounts in the entire amount of the monomer mixture.

The alkyl acrylate may, for example, be methyl acrylate, ethyl acrylate, propyl acrylate, butyl acrylate, pentyl acrylate, hexyl acrylate, heptyl acrylate, 2-ethylhexyl acrylate, octyl acrylate, nonyl acrylate, decyl acrylate or dodecyl acrylate. These monomers may be used alone or in combination of two or more of them. Among them, particularly preferred is methyl acrylate, ethyl acrylate, propyl acrylate or butyl acrylate.

Further, for the purpose of improving physical properties such as oil resistance, mechanical strength and compression set, styrene, divinylbenzene, hydroxyethyl (meth)acrylate, hydropropyl (meth)acrylate, an alkyl methacrylate having a $C_{1-12}$ alkyl chain, a bifunctional acrylate, a bifunctional methacrylate, a trifunctional acrylate, a trifunctional methacrylate, an α-olefin such as ethylene, propylene or isobutene, a conjugated diene such as butadiene, isoprene or chloroprene, may be copolymerized. Such a copolymerized amount is preferably at most 40 wt%, more preferably at most 30 wt%, based on the main components of the acrylic rubber. If the copolymerized amount exceeds 40 wt%, the balance of the physical properties such as oil resistance, mechanical strength and moldability, of the acrylic rubber tends to be impaired.

Here, like the vinyl copolymer, an active chlorine-containing monomer, an epoxy group-containing monomer or a carboxyl group-containing monomer may further be copolymerized.

The method for producing the acrylic rubber may be such that monomer components comprising, as the main components, methoxyethyl acrylate, an alkyl acrylate, acrylonitrile and allyl methacrylate, are dropwise added to water containing a surfactant, water and a polymerization initiator, for emulsion copolymerization. At that time, part of the monomer components may preliminarily be added. After completion of the emulsion polymerization, salting out is carried out to obtain the acrylic rubber.

In the present invention, the blend ratio of the olefinic graft copolymer to the acrylic rubber (olefinic graft copolymer/acrylic rubber) and the blend ratio of the olefinic graft precursor to the acrylic rubber (olefinic graft precursor/acrylic rubber) are preferably from 5/95 to 95/5, more preferably from 10/90 to 90/10, particularly preferably from 15/85 to 85/15, by weight ratio. If the above ratio is less than 5/95, the acrylic rubber tends to be large, whereby the molding processability tends to deteriorate, or the mechanical strength of the obtained molded product tends to be low. On the other hand, if the above ratio exceeds 95/5, the acrylic rubber tends to be small, whereby the compression set of the molded product tends to be poor, and the hardness tends to be high.

Now, the crosslinking agent will be described.

The crosslinking agent of the present invention is one reactive with crosslinking functional groups of the olefinic graft precursor and the acrylic rubber and may be selectively used depending upon the introduced functional groups. Accordingly, in a case where crosslinking sites are active chlorine, epoxy groups, carboxyl groups or unsaturated groups, specific examples of the crosslinking agent are functional groups reactive with such functional groups, such as a sulfur-containing organic compound, an amino group-containing compound, an acid anhydride group-containing compound, a carboxyl group-containing compound, an isocyanate group-containing compound, an epoxy group-containing compound, a resin crosslinking agent and an organic peroxide. Such a crosslinking agent is preferably used in combination with a known crosslinking accelerator.

The sulfur-containing organic compound may, for example, be a thiuram such as tetramethylthiuram disulfide, tetraethylthiuram disulfide, tetrabutylthiuram disulfide or dipentamethylenethiuram tetrasulfide; a dithioacid salt such as

sec-diethyldithiocarbamate, tert-diethyldithiocarbamate or sec-dimethyldithiocarbamate; morpholine disulfide, or an alkylphenol disulfide.

The amino group-containing compound may, for example, be an aliphatic diamine such as trimethylhexamethylenediamine, ethylenediamine or 1,4-diaminobutane; an aliphatic polyamine such as triethylenetetramine, pentaethylenehexamine or aminoethylethanolamine; or an aromatic amine such as phenylenediamine, 4,4'-methylenedianiline, toluenediamine or diaminoditolylsulfone.

The acid anhydride group-containing or the carboxyl group-containing compound may, for example, be triymellitic anhydride, pyromellitic anhydride, terephthalic acid, isophthalic acid, adipic acid, sebacic acid or cyanuric acid.

The isocyanate group-containing compound may, for example, be toluene diisocyanate, or an isocyanate of prepolymer having an isocyanate group as a terminal group.

The epoxy group-containing compound may, for example, be an epoxide such as diglycidyl ether of e.g. bisphenol A, resorcinol or hydroquinone.

The resin crosslinking agent may, for example, be an alkylphenol-formaldehyde resin, a melamine-formaldehyde condensate, a triazine-formaldehyde condensate or a hexamethoxymethyl-melamine resin.

The organic peroxide may, for example, be a ketone peroxide, a peroxyketal, a hydroperoxide, a dialkyl peroxide, a diacyl peroxide, a diacyl peroxide, a peroxydicarbonate or a peroxyester. Among them, a peroxyketal, a dialkyl peroxide or a diacyl peroxide is preferred.

In a case where crosslinking sites are unsaturated groups such as non-conjugated dienes, or contain no functional group, crosslinking by means of an organic peroxide is effective. The organic peroxide to be used for the crosslinking reaction is not particularly limited, and all of known organic peroxides may be used. For example, di-tert-butyl peroxide, tert-butylcumyl peroxide, dicumyl peroxide, $\alpha,\alpha'$-bis(tert-butylperoxydiisopropyl)benzene, 2,5-dimethyl-2,5-bis(tert-butylperoxy)hexane, 2,5-dimethyl-2,5-bis(tert-butylperoxy)hexyne-3, 2,4-dichlorobenzoyl peroxide, benzoyl peroxide, 1,1-bis(tert-butylperoxy)-3,3,5-trimethylcyclohexane, n-butyl-4,4-bis(tert-butylperoxy)valerate and tert-butylperoxycumene may, for example, be mentioned.

Among them, preferred may, for example, be di-tert-butyl peroxide, tert-butylcumyl peroxide, dicumyl peroxide, $\alpha,\alpha'$-bis(tert-butylperoxydiisopropyl)benzene, 2,5-dimethyl-2,5-bis(tert-butylperoxy)hexane or 2,5-dimethyl-2,5-bis(tert-butylperoxy)hexyne-3.

To the olefinic TPE, an olefinic (co)polymer formed of an $\alpha$-olefin monomer may further be added and melt-kneaded. As specific examples of such an olefinic (co)polymer, low density polyethylene, ultra-low density polyethylene, super ultra low density polyethylene, low molecular weight polyethylene, polypropylene, and an ethylene/propylene copolymer, may, for example, be mentioned.

Among them, preferred from the viewpoint of oil resistance and mechanical properties is polypropylene or an ethylene/propylene copolymer. Particularly preferred is homopolypropylene, an oil resistant ethylene/propylene copolymer.

The oil resistant ethylene/propylene copolymer is an ethylene/propylene block copolymer having an ethylene content of at most 10 wt%, or an ethylene/propylene random copolymer having an ethylene content of at most 5 wt%.

The amount of the above olefinic (co)polymer to be melt-kneaded is preferably at most 90 wt%, more preferably at most 80 wt%, particularly preferably at most 70 wt%, in the olefinic TPE. If the amount exceeds 90 wt%, the compression set of a molded product tends to be low, such being undesirable. Further, the above olefinic (co)polymers may be used in combination as a mixture of two or more of them.

Further, to the olefinic TPE, at least one member selected from the group consisting of a co-crosslinking agent, a plasticizer, a spreading agent, a lubricant, an anti-aging agent, an ultraviolet absorber and a photostabilizer, may be incorporated as additives. By such additives, it is possible to improve the performance of the olefinic TPE depending upon the particular purpose. Further, additives such as a filler, a flame retardant, a coloring agent, a scorch-preventive agent, a coupling agent and a blowing agent may be used, as the case requires.

The co-crosslinking agent to be used in the present invention may, for example, be p-benzoquinonedioxime, p,p-dibenzoylquinonedioxime, ethylene glycol diacrylate, ethylene glycol dimethacrylate, diethylene glycol acrylate, diethylene glycol dimethacrylate, triethylene glycol diacrylate, triethylene glycol dimethacrylate, tetraethylene glycol diacrylate, tetraethylene glycol dimethacrylate, polyethylene glycol diacrylate, polyethylene glycol dimethacrylate, polyoxyethylene-modified bisphenol A diacrylate, polyoxyethylene-modified bisphenol A dimethacrylate, trimethylolpropane triacrylate, trimethylolpropane trimethacrylate, 1,6-hexanediol diacrylate, 1,6-hexanediol dimethacrylate, diallyl phthalate, tetraallyl oxyethane, triallyl cyanurate, triallyl isocyanurate, triallyl phosphate, maleimide, phenyl maleimide, N,N'·m-phenylenebismaleimide, maleic anhydride, itaconic acid, divinylbenzene, vinyltoluene or 1,2-polybutadiene.

The plasticizer may, for example, be a phthalate such as dimethyl phthalate, di-2-ethylhexyl phthalate, dioctyl phthalate or diisononyl phthalate; a phosphate such as tributyl phosphate or triphenyl phosphate; a trimellitate; an ester of an aliphatic dibasic acid such as di-2-ethylhexyl adipate, diisodecyl adipate, dibutyl diglycol adipate, di-2-ethylhexyl azelate, dibutyl sebacate or di-2-ethylhexyl sebacate; or sulfonamide. Among them, preferred is a phthalate such as dimethyl phthalate, di-2-ethylhexyl phthalate, dioctyl phthalate or diisononyl phthalate; or an ester of an aliphatic dibasic

acid such as di-2-ethylhexyl adipate, diisodecyl adipate, dibutyl diglycol adipate, di-2-ethylhexyl azelate, dibutyl sebacate or di-2-ethylhexyl sebacate.

The spreading agent may, for example, be a mineral oil (such as a paraffin type, naphthene type or aromatic type mineral oil).

The lubricant may, for example, be silicone oil, a petroleum wax, an olefin wax, a polycondensed wax, an aliphatic acid, a metal salt of an aliphatic acid, an aliphatic acid ester, an aliphatic acid amide or an alkylene oxide derivative.

The anti-aging agent may be at least one anti-aging agent containing a phenolic anti-aging agent as an essential component. A phenolic anti-aging agent may be used alone, but it may be used in combination with another anti-aging agent.

The anti-agent which can be used in combination with a phenolic anti-aging agent, may, for example, be a phosphorus type, a sulfur type or an amine type anti-aging agent.

The phenolic anti-aging agent may, for example, be a monophenolic anti-aging agent such as 2,6-di-tert-butyl-4-methylphenol, 2,6-di-tert-butyl-4-ethylphenol, 2-tert-butyl-4-methoxyphenol, 3-tert-butyl-4-methoxyphenol or n-octadecyl-3-(3,5-di-tert-butyl-4-hydroxyphenyl)propionate; a bisphenolic anti-aging agent such as 2,2'-methylenebis(4-methyl-6-t-butylphenol), 2,2'-methylenebis(4-ethyl-6-tert-butylphenol), 4,4'-thiobis(3-methyl-6-tert-butylphenol), 4,4'-butylidenebis(3-methyl-6-tert-butylphenol) or 3,9-bis[1,1-dimethyl-2-[β-(3-tert-butyl-4-hydroxy-5-methylphenyl)propionyloxy] ethyl]2,4,8,10-tetraoxaspiro[5.5]undecane; or a polymer type phenolic anti-aging agent such as 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tetrakis-[methylene-3-(3',5'-di-tert-butyl-4'-hydroxyphenyl)propionate]methane, bis[3,3'-bis-(4'-hydroxy-3'-tert-butylphenyl)butyric acid]glycol ester, 1,3,5-tris(3',5'-di-t-butyl-4'-hydroxybenzyl)-sec-triazine-2,4,6-(1H,3H,5H)trione or D-α-tocophenol.

Further, the phosphorus-type anti-aging agent may, for example, be triphenyl phosphite, diphenylisodecyl phosphite, phenyldiisodecyl phosphite, 4,4'-butylidene-bis(3-methyl-6-tert-butylphenylditridecyl) phosphite, octadecyl phosphite, tris(nonylphenyl) phosphite, diisodecyl pentaerythritol diphosphite, 9,10-dihydro-9-oxa-10-phosphaphenanthrene-10-oxide, 10-(3,5-di-tert-butyl-4-hydroxybenzyl)-9,10-dihydro-9-oxa-10-phosphaphenanthrene-10-oxide, 10-decyloxy-9,10-dihydro-9-oxa-10-phosphaphenanthrene, tris(2,4-di-tert-butylphenyl) phosphite, bis(2,4-di-tert-butylphenyl) pentaerythritol-di-phosphite, bis(2,6-di-tert-butyl-4-methylphenyl)pentaerythritol-diphosphite or 2,2'-methylenebis(4,6-di-tert-butylphenyl)octylphosphite.

Further, the sulfur type anti-aging agent may, for example, be dilauryl 3,3-thiodipropionate, dimyristyl 3,3'-thiodipropionate, distearyl 3,3'-thiodipropionate, pentaerythritol tetrakis(3-laurylthiopropionate) or 2-mercaptobenzimidazole.

Further, the amine type anti-aging gent may, for example, be an alkyl-substituted diphenylamine.

A plurality of these anti-aging agents may be used in combination so long as at least one phenolic anti-aging agent is contained.

The ultraviolet absorber may, for example, be a benzotriazole type ultraviolet absorber such as 2-(2H-benzotriazol-2-yl)-p-cresol, 2-(2H-benzotriazol-2-yl)-4,6-bis(1-methyl-1-phenylethyl)phenol, 2-[5-chloro(2H)-benzotriazol-2-yl]-4-methyl-6-(tert-butyl)phenol, 2-(2H-benzotriazol-2-yl)-4,6-di-tert-pentylphenol, 2-(2H-benzotriazol-2-yl)-4-(1,1,3,3-tetramethylbutyl)phenol, a reaction product of methyl-3-(3-(2H-benzotriazol-2-yl)-5-tert-butyl-4-hydroxyphenol)propionate with polyethylene glycol 300, or 2-(2H-benzotriazol-2-yl)-6-dodecyl-4-methylphenol; a triazine type ultraviolet absorber such as 2-(4,6-diphenyl-1,3,5-triazin-2-yl)-5-[(hexyl)oxy]-phenol; a benzophenone type ultraviolet absorber such as 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone or bis(2-methoxy-4-hydroxy-5-benzoylphenyl)methane; an oxalic anilide type ultraviolet absorber such as 2-ethoxyphenyl-4-dodecylphenyloxalic anilide; or a cyano acrylate type ultraviolet absorber such as 2-ethylhexyl-2-cyano-3,3'-diphenyl acrylate or ethyl-2-cyano-3,3'-diphenyl acrylate.

Among them, preferred is a benzotriazole type ultraviolet absorber such as 2-(2H-benzotriazol-2-yl)-p-cresol, 2-(2H-benzotriazol-2-yl)-4,6-bis(1-methyl-1-phenylethyl)phenol, 2-[5-chloro(2H)-benzotriazol-2-yl]-4-methyl-6-(tert-butyl)phenol, 2-(2H-benzotriazol-2-yl)-4,6-di-tert-pentylphenol, 2-(2H-benzotriazol-2-yl)-4-(1,1,3,3-tetramethylbutyl) phenol, a reaction product of methyl 3-(3-(2H-benzotriazol-2-yl)-5-tert-butyl-4-hydroxyphenyl)propionate with polyethylene glycol 300, or 2-(2H-benzotriazol-2-yl)-6-dodecyl-4-methylphenol; or a triazine type ultraviolet absorber such as 2-(4,6-diphenyl-1,3,5-triazin-2-yl)-5-[(hexyl)oxy]-phenol.

The photostabilizer may, for example, be a benzoate type photostabilizer such as 2,4-di-tert-butylphenyl-3,5-di-tert-butyl-4-hydroxybenzoate; a high molecular weight type hindered amine type photostabilizer such as N,N',N'',N'''-tetrakis-(4,6-bis-(butyl-(N-methyl-2,2,6,6-tetramethylpiperidin-4-yl)amino)-triazin-2-yl)-4,7-diazadecane-1,10-diamine, a polycondensate of dibutylamine·1,3,5-triazine·N,N'-bis(2,2,6,6-tetramethyl-4-piperidyl-1,6-hexamethylenediamine with N-(2,2,6,6-tetramethyl-4-piperidyl)butylamine, poly[{6-(1,1,3,3-tetramethylbutyl)amino-1,3,5-triazin-2,4-diyl}{(2,2,6,6-tetramethyl-4-piperidyl)imino}hexamethylene{(2,2,6,6-tetramethyl-4-piperidyl)imino}], or a polymer of dimethylsuccinate with 4-hydroxy-2,2,6,6-tetramethyl-1-piperidineethanol; or a low molecular weight type hindered amine type

photostabilizer such as decanedioic acid bis(2,2,6,6-tetramethyl-1(octyloxy)-4-piperidinyl)ester, a reaction product of 1,1-dimethylethylhydroperoxide with octane, bis(1,2,2,6,6-pentamethyl-4-piperidyl)[[3,5-bis(1,1,dimethylethyl)-4-hydroxylphenyl]methyl]butylmalonate, bis(1,2,2,6,6-pentamethyl-4-piperidyl)sebacate and methyl 1,2,2,6,6-pentamethyl-4-piperidyl sebacate (mixture) or bis(2,2,6,6-tetramethyl-4-piperidyl)sebacate.

Among them, preferred is a benzoate type photostabilizer such as 2,4,di-tert-butylphenyl-3,5-di-tert-butyl-4-hydroxybenzoate; or a high molecular weight hindered amine type photostabilizer such as N,N',N",N'"-tetrakis-(4,6-bis-(butyl-(N-methyl-2,2,6,6-tetramethylpiperidin-4-yl)amino)-triazin-2-yl)-4,7-diazadecane-1,10-diamine, a polycondensate of dibutylamine·1,3,5-triazine-N,N'-bis(2,2,6,6-tetramethyl-4-piperidyl-1,6-hexamethylenediamine with N-(2,2,6,6-tetramethyl-4-piperidyl)butylamine, poly[{6-(1,1,3,3-tetramethylbutyl)amino-1,3,5-triazin-2,4-diyl}{(2,2,6,6-tetramethyl-4-piperidyl)imino}hexamethylene{(2,2,6,6-tetramethyl-4-piperidyl)imino}] or a polymer of dimethyl succinate with 4-hydroxy-2,2,6,6-tetramethyl-1-piperidineethanol.

The filler as another additive may, for example, be carbon black, white carbon, clay, mica, calcium carbonate or talc.

The flame retardant may, for example, be an inorganic flame retardant represented by magnesium hydroxide or aluminum hydroxide; or an organic flame retardant represented by a halogen type or phosphorus type flame retardant.

The scorch-preventive agent may, for example, be a sulfonamide derivative, diphenyl urea or N-(cyclohexylthio) phthalimide.

These additives may be incorporated preferably in an amount of at most 200 wt%, more preferably at most 150 wt%, based on the olefinic thermoplastic elastomer of the present invention. If the amount exceeds 200 wt%, the mechanical properties of a molded product tend to be low, such being undesirable.

Now, the process for producing the olefinic TPE will be described in detail.

In the present invention, the blend ratio of the olefinic graft precursor to the acrylic rubber (olefinic graft precursor/acrylic rubber) is preferably from 95/5 to 5/95, more preferably from 90/10 to 10/90, particularly preferably from 85/15 to 15/85, by weight ratio. If the acrylic rubber exceeds 95 wt%, the molding processability tends to deteriorate, or the mechanical strength of the obtainable molded product tends to be low, and on the other hand, if it is less than 5 wt%, the compression set of the molded product tends to be poor, and further, the hardness tends to be high.

In the present invention, the amount of the crosslinking agent to be added is preferably from 0.01 to 10 wt%, more preferably from 0.1 to 5 wt%, based on the total amount of the olefinic graft precursor and the acrylic rubber. This amount is optionally changed depending upon the concentration of the crosslinking points and the type of the crosslinking agent. If it is less than 0.01 wt%, the compression set of the obtainable olefinic TPE tends to be poor, and if it exceeds 10 wt%, the molding processability tends to deteriorate.

The olefinic TPE is produced by melting and kneading the olefinic graft precursor, the acrylic rubber and the crosslinking agent. The melting and kneading of the olefinic TPE of the present invention may be carried out by using a kneader which is commonly used, such as a Banbury mixer, a pressure kneader, a knead extruder, a twin screw extruder or a roll mill.

The kneading temperature is preferably within a range of from 100 to 300°C, more preferably from 120 to 280°C. If such a temperature is less than 100°C, the melting tends to incomplete, or the melt viscosity tends to be high, whereby the mixing tends to be inadequate, or phase separation or delamination is likely to be observed in the molded product, such being undesirable. On the other hand, if it exceeds 300°C, decomposition or gelation of the resin to be mixed tends to take place, such being undesirable. At the time of kneading, another thermoplastic resin or rubber may be added, as the case requires.

As such another thermoplastic resin or rubber, for example, an engineering plastic such as a polyamide resin, a polyester resin, a polyacetal resin, a polycarbonate resin, a polyphenylene ether resin or a polyarylate resin; an olefinic resin such as an ethylene/ethyl acrylate copolymer or an ethylene/glycidyl methacrylate copolymer; a styrene type resin such as polystyrene, high impact polystyrene or an acrylonitrile/butadiene/styrene resin; a common plastic such as an acrylic resin or a vinyl chloride resin; a thermoplastic elastomer such as an ester type thermoplastic elastomer, a styrene type thermoplastic elastomer, an olefin type thermoplastic elastomer, a urethane type thermoplastic elastomer, an amide type thermoplastic elastomer or a polybutadiene type thermoplastic elastomer; a synthetic rubber such as butadiene rubber, butadiene/styrene rubber, butadiene/acrylonitrile rubber, chloroprene rubber, hydrin rubber, butyl rubber, ethylene/propylene copolymer rubber, urethane rubber, silicone rubber, fluoro rubber, silicone rubber or acryl rubber; or natural rubber may, for example, be mentioned.

The gap-filling member to be used in the present invention generally refers to a gasket, molding, weather strip or sealing rubber to be formed along the periphery of a plate-like body for vehicle windows, and it may be provided at any position such that it may be one provided along the entire periphery of the plate-like body for vehicle windows, one intermittently formed along the periphery, or one provided on one side edge or a few side edges.

Further, the window for which the gap-filling member is to be used, may be at any site of a vehicle. For example, in the case of an automobile, the window may be a windshield, a side window glass, a rear window glass or a sunroof.

The gloss value of the gap-filling member is preferably at least 15 in order to realize an exterior appearance

presenting an impression integral with the vehicle main body, and further, it is preferably at most 40, since if the gloss is stronger than the vehicle body or the glass, the integral impression of the exterior appearance tends to be impaired. Further, the gloss value is more preferably at least 20 and at most 40, whereby the seam joint between the vehicle body and the glass such as a flush surface becomes not distinct. Further, in the case of an exterior appearance of a vehicle where the integral impression is important, the gloss value is preferably at least 30 and at most 60.

On the other hand, with respect to the plate-like body for vehicle windows, the shape may be a flat plate shape or a curved plate shape; the construction may be common single plate glass, reinforced glass, double layered glass, laminated glass or metal wire-containing glass; and the material may be not only inorganic glass but also so-called organic transparent resin glass such as a polycarbonate, a polystyrene or a polymethyl methacrylate, and they may be used alone or in the form of a laminate of two or more of them.

Further, such a plate-like body for vehicle window may be provided, on its surface, with a coating layer having various functions such as heat ray reflecting function, electroconductive function, etc. Further, the peripheral portion of the plate-like body for vehicle windows may be coated with a colored ceramic coating material for masking. By such a colored ceramic coating material, it is possible to protect the adhesive to be used for bonding the plate-like body for vehicle windows and the gap-filling member, from deterioration by e.g. ultraviolet rays.

The adhesive to be used for bonding the plate-like body for vehicle windows and the gap-filling member, may be a chlorine type adhesive or a non-chlorine type adhesive. For example, the chlorine type adhesive may preferably be an adhesive containing a maleic anhydride-modified propylene/1-butene copolymer, a maleic anhydride-modified chlorinated polypropylene and epoxysilane, or an adhesive containing chlorinated polypropylene, a epoxy group-containing compound and a silane coupling agent. Further, the non-chlorine type adhesive may preferably be a modified polyolefin type adhesive having an $\alpha,\beta$-unsaturated carboxylic acid and its acid anhydride graft-copolymerized with a propylene/$\alpha$-olefin copolymer.

Further, in order to improve the adhesion of the plate-like body for vehicle windows and the gap-filing member, the peripheral portion of the plate-like body for vehicle windows may preliminarily be subjected to primer treatment with an adhesive of urethane type, amide type, acrylic type, phenol type, polyester type or silane type.

## EXAMPLES

Now, specific embodiments of the present invention will be described with reference to Examples and Comparative Examples. However, it should be understood that the present invention is by no means thereby restricted.

### REFERENCE EXAMPLE 1: Preparation of acrylic rubber

Into a flask equipped with a stirrer, a thermometer, a condenser, a dropping device and a nitrogen gas-supplying tube, 2,300 g of deionized water and 20 g of sodium dodecyl sulfate were charged, and then while supplying nitrogen gas, the temperature was raised to 70°C with stirring. Thereafter, as a polymerization initiator, 5 g of potassium persulfate was added.

Then, while the temperature of 70°C was maintained, 1,608 g of a monomer mixture (480 g of methoxyethyl acrylate, 480 g of ethyl acrylate, 480 g of butyl acrylate, 160 g of acrylonitrile and 8 g of allyl methacrylate) was dropwise added over a period of 3 hours and then further polymerized for 3 hours to obtain an emulsion. In this state, the average particle size was 90 nm, as measured by dynamic light scattering (DLS). Then, this emulsion was dropwise added over a period of 1 hour to the same weight amount of a 1% calcium chloride aqueous solution to carry out salting out. Then, filtration, washing with water and drying at 70°C were carried out to obtain an acrylic rubber.

### REFERENCE EXAMPLE 2: Preparation of olefinic graft precursor

Into a stainless steel autoclave having a capacity of 5 L, 2,000 g of pure water was put and further 2.5 g of polyvinyl alcohol was dissolved as a suspension agent. Then, 700 g of polypropylene (block copolymer, average particle diameter: 3 mm, ethylene content: 5.9 wt%) was put thereinto, followed by stirring and dispersing. Then, a monomer mixture comprising 1.2 g of benzoyl peroxide (radical polymerization initiator manufactured by NOF Corporation, tradename: NYPER B), 6 g of tert-butyl peroxymethacryloyloxyethyl carbonate (radical polymerizable organic peroxide), and 300 g of a vinyl monomer mixture (100 g of styrene, 100 g of butyl acrylate and 100 g of hydroxypropyl methacrylate) was introduced into the above autoclave, followed by stirring.

Then, the autoclave was heated to from 60 to 65°C and stirred for 2 hours to have the radical polymerization initiator, the radical polymerizable organic peroxide and the vinyl monomers impregnated to the polypropylene. Then, the temperature was raised to from 80 to 85°C and maintained at that level for 6 hours to complete the polymerization, whereupon washing with water and drying were carried out to obtain a graft precursor. The vinyl copolymer in this graft precursor was extracted with toluene, and the number average polymerization degree was measured by GPC and found

to be 900.

This graft precursor was observed by a scanning electron microscope (JEOL JSM T300, manufactured by JEOL Ltd.) and found to be of a multilayer structure wherein spherical resin particles with particle diameters of from 0.3 to 0.5 μm were uniformly dispersed.

EXAMPLE 1

To 1,500 g of the acrylic rubber obtained in Reference Example 1, 300 g of the olefinic graft precursor obtained in Reference Example 2, 300 g of polypropylene (MFR: 0.5, propylene homopolymer), 500 g of diisononyl phthalate, 250 g of dibutyl diglycol adipate, 75 g of a polyoxyethylene-modified bisphenol A dimethacrylate (tradename: BPE-200, manufactured by Shin-nakamura Chemical Corporation, hereinafter referred to simply as BPE-200) as a co-crosslinking agent, and 15 g of a phenolic anti-aging agent (tradename: Irganox 1010) were added and kneaded for 10 minutes by means of a pressure type kneader (manufactured by Moriyama K.K., capacity: 3.5 L) preheated to 190°C.

Then, 180 g of silicon master batch (tradename: X22-2101, manufactured Shin-Etsu Chemical Co., Ltd.), 150 g of paraffin wax (tradename: FT100, manufactured by Nippon Seiro Co., Ltd.), 30 g of carbon black master batch (tradename: SPPM-8G680, manufactured by Sumika Color Co., Ltd.) and 30 g of 2,5-dimethyl-2,5-bis(tert-butylperoxy) hexane (tradename: Perhexa 25B, manufactured by NOF Corporation, hereinafter referred to simply as Perhexa 25B) as a crosslinking agent, were added and further kneaded for 5 minutes. The obtained olefinic TPE was supplied into a twin screw single screw extruder having a cylinder temperature set at 170°C, extruded and then granulated to obtain pellets (NOFALLOY AT13410, hardness: 79).

Using the above pellets, test specimens were prepared by injection molding. Namely, the above pellets were put into an injection molding machine (frame-tightening pressure: 100 tons, manufactured by Eegotech), and three types of plate-like molded products were prepared by injection molding. The sizes of the plate-like molded products were 120 mm x 120 mm x 2 mm, 90 mm x 90 mm x 4 mm, and 100 mm x 50 mm x 2 mm, and the molding conditions were set to be such that the nozzle/cylinder temperatures were 235/200 to 235°C, the mold surface temperature was 50°C, and the injection rate was 100 $cm^3$/sec.

By using such plate-like molded products or test specimens cut out from such plate-like molded products, the physical properties were measured by the following test methods. The results are shown in Tables 1 to 3.

(1) Abrasion (scratch) test

In accordance with JIS L0849, an abrasion test was carried out with cotton duck shirting No. 3 of JIS L0803 by using abrasion machine (gakushin type manufactured by KNT). The number of abrasion test times by horizontal reciprocating motion under a vertical load of 4.9 N was 10, 50 and 100 times. With respect to the test specimens after the test, as to the changes of their surfaces, the 60° specular gloss was measured in accordance with JIS Z8471, and at the same time, the change in appearance, and the surface roughness were measured.

(2) Measurement of gloss (surface gloss) (gloss value)

In accordance with method 3 of JIS Z8741, the gloss (surface gloss) (gloss value) was measured by using a surface gloss meter (manufactured by Nippon Denshoku Industries Co., Ltd.). The angle for the measurement was 60°, and as test specimens, the test specimens before and after the abrasion test were used.

(3) Measurement of surface roughness

With respect to the surface roughness, the average roughness Ra of the surface of a test specimen after the abrasion test (number of test times: 100 times) was measured from a direction perpendicular to the abrasion test direction by using a surface roughness meter (manufactured by Kosaka Laboratory Ltd.) The measured range was 16 mm within the cotton duck contact portion.

(4) Surface scratch test

In the abrasion test (1), the degree of scratches on the surface of a test specimen after carrying out the test of 10 times, 50 times or 100 times was visually evaluated. The evaluation standards were the following five grades.

1: No scratches observed
2: Scratches slightly observed
3: Scratches fairly observed

4: Scratches distinctly observed
5: Scratches remarkably observed

(5) Chemical resistance performance test

In accordance with JIS K7114, a test specimen cut out in a size of 30 mm x 30 mm was immersed in a reagent for 4 hours by using a constant temperature tank (DK400T, manufactured by Yamato Scientific Co., Ltd.), and the change in weight was measured. The reagent used was Pearl Metallic solid car wax manufactured by SOFT99 Corporation (indicated components: carnauba wax, silicone oil, petroleum type solvent: 75%), and the temperature in the container was maintained at 70°C±2°C during the immersion.

$$\text{Change }(\%) = \{(\text{weight before test} - \text{weight after test}) / (\text{weight before test})\} \times 100$$

(6) Test on adhesion performance with glass

In accordance with JIS K6256, a test specimen cut out, and a reinforced glass plate provided with a colored ceramic layer were used. The size of the olefinic TPE test specimen was 150 mm x 25 mm x 3 mm, and the size of the glass plate was 150 mm x 25 mm x 5 mm. An adhesive was applied to the colored ceramic layer portion of 60 mm x 25 mm from the end portion of the glass plate. After the adhesive layer of the test specimen was completely cured, the adhesion performance was measured by carrying out a peeling test by using a tensile compression tester (AGS-J, manufactured by Shimadzu Corporation) conforming to JIS B7721 under such conditions that the peeling angle was 180°, and the moving speed of the clamp was 200 mm/min. As the adhesive, a chlorinated polyolefin type adhesive was used as a chlorine type adhesive, and an adhesive containing a modified polyolefin was used as a non-chlorine type adhesive.

EXAMPLE 2

The kneading and extrusion for granulation were carried out in the same manner as in Example 1 except that 300 g of polypropylene in Example 1 was changed to 600 g, and 180 g of the silicon master batch was changed to 120 g, to obtain pellets (NOFALLOY AT13260). The same tests as in Example 1 were carried out by using, instead of the olefin type TPE (NOFALLOY AT13410) used in Example 1, the olefin type TPE different in hardness (NOFALLOY AT13260, hardness: 87).

EXAMPLE 3

The kneading and extrusion for granulation were carried out in the same manner as in Example 1 except that in Example 1, 15 g of 2-(2H-benzotriazol-2-yl)-4,6-bis(1-methyl-1-phenylethyl)phenol was added as a benzotriazole type ultraviolet absorber, to obtain pellets (NOFALLOY AT13630). The same tests as in Example 1 were carried out by using, instead of the olefin type TPE (NOFALLOY AT13410) used in Example 1, the olefin type TPE (NOFALLOY AT13630, hardness: 79).

COMPARATIVE EXAMPLE

The same tests as in Example 1 were carried out by using, instead of the olefinic TPE used in Example 1, an olefinic TPE (compound type TPO: SANTOPRENE 121-65M300, registered trademark of Advanced Elastomer Systems; hardness: 65) being a vulcanized alloy of EPDM (ethylene propylene diene monomer) rubber with PP (polypropylene).

TABLE 1

| Example | Number of abrasion test times | Initial gloss value | Gloss value after abrasion test | Average surface roughnEss Ra (μm) | Degree of scratches visually observed (evaluation by 1 to 5 grades) |
|---|---|---|---|---|---|
| Ex. 1 | 10 | 36.1 | 31.0 | - | 1* |
| | 50 | 30.1 | 24.0 | - | 2* |
| | 100 | 34.3 | 25.6 | 0.380 | 2* |
| Ex. 2 | 10 | 20.6 | 21.6 | - | 1* |
| | 50 | 32.7 | 29.4 | - | 2* |
| | 100 | 30.6 | 28.9 | 0.250 | 2* |
| Ex. 3 | 10 | 34.6 | 30.9 | - | 1* |
| | 50 | 34.7 | 28.1 | - | 2* |
| | 100 | 34.9 | 26.4 | 0.490 | 2* |
| Comp. Ex. | 10 | 5.6 | 1.3 | - | 4* |
| | 50 | 5.6 | 1.0 | - | 4* |
| | 100 | 5.8 | 0.9 | 0.542 | 4* |
| 1. No scratches observed<br>2. Scratches slightly observed<br>4. Scratches distinctly observed | | | | | |

TABLE 2

| Example | Chemical resistance performance |
|---|---|
| | Weight change % |
| Example 1 | 26.68 |
| Example 2 | 25.45 |
| Example 3 | 28.48 |
| Comparative Example | 32.41 |

TABLE 3

| Example | Type of adhesive | Adhesion performance |
|---|---|---|
| | | Tensile strength N/25 mm |
| Example 1 | Chlorine type adhesive | 146.1 |
| | Non-chlorine type adhesive | 160.6 |
| Example 2 | Chlorine type adhesive | 185.9 |
| | Non-chlorine type adhesive | 175.2 |
| Example 3 | Chlorine type adhesive | 174.3 |
| | Non-chlorine type adhesive | 178.9 |
| Comparative Example | Chlorine type adhesive | 98.8 |

Table 1 shows the results of the abrasion test, the surface roughness test and the surface scratch test.

From the results of the measurement of the initial gloss values in Examples and Comparative Example, it is evident that the initial gloss value of the gap-filling member of the present invention is at a level of from 3 times to 6 times the value in Comparative Example. Namely, the gap-filling member of the present invention has a wide range for adjusting the initial gloss value and is capable of presenting various gloss levels, and at the same time, it has accomplished a high initial gloss value which used to be difficult to accomplish with conventional olefin type TPE. Accordingly, it has been made possible to adjust the gloss to the vehicle body and glass, including an exterior appearance with a strong surface gloss. Thus, it is possible to realize an exterior appearance having a better integral impression thereby to increase the degree of freedom in the design of exterior appearance of vehicles.

Further, the gloss values after the tests in Examples are sufficiently large as compared with Comparative Example, and the decrease in the gloss value is small. Further, the results of visual evaluation of scratches are good in all tested levels as compared with Comparative Example. Thus, it can be said that the gap-filling member of the present invention is high in the scratch resistance as the resistance against the abrasion or surface scratching.

Table 2 shows the results of the chemical resistance performance tests.

From the results of the measurements of the weight change in Examples and Comparative Example, it is evident that the gap-filling member of the present invention has a weight change less than Comparative Example. As the olefinic TPE is used as a material for gaskets for automobiles, the gap-filling member of the present invention can be said to have sufficient chemical resistance as a gasket for automobiles.

From these results, the gap-filling member of the present invention is excellent in the scratch resistance and chemical resistance and is capable of maintaining the high gloss value even in use for a long period of time. Thus, it is possible to provide gap-filling members having various gloss levels, and at the same time, with a gap-filling member employing an olefinic TPE material, an exterior appearance having a strong gloss with a high gloss value has been realized which used to be difficult to accomplish. Further, the improvement in durability of such an exterior appearance with a strong glass has also been realized. As a result, it has been made possible to easily realize and maintain an outer appearance having a better integral impression by adjusting the gloss of the gasket using the olefinic TPE of the present invention with the vehicle body and glass.

Table 3 shows the results of the test on the adhesion performance with glass.

From the results of the measurements of the tensile strength in Examples and Comparative Example, it is evident that the gap-filling member of the present invention has a higher adhesive strength than Comparative Example by using either the chlorine type adhesive or the non-chlorine type adhesive, and it has a better adhesive property with glass than the conventional olefinic TPE. Further, in all Examples in Table 3, cohesive failure was observed, which indicates that the adhesive strength is sufficient. Namely, the gap-filling member of the present invention can be said to have a sufficient adhesion performance as a gap-filling member for vehicles, since an olefinic TPE is used as a gasket (a gap-filling member) of vehicles.

A conventional olefinic TPE material has had a problem such that the adhesion with glass or metal was difficult. However, with the gap-filling member employing the olefinic TPE of the present invention, this problem can be solved, and at the same time, even by a non-chlorine type adhesive, it has a sufficient adhesion performance, whereby it has been made possible to accomplish dechlorination of the entire periphery of the gap-filling member including the adhesive.

INDUSTRIAL APPLICABILITY

The gap-filling member made of the olefinic TPE of the present invention and the plate-like body for vehicle windows, provided with such a gap-filling member, make it possible to provide exterior appearances having various gloss levels including one having a weak gloss to one having a strong gloss, and to maintain such a nature for a long period of time, and they sufficiently satisfy other performance required for a gap-filling member such as a gasket. Thus, they are applicable not only to automobiles, but also to windows of trains, ships or aircrafts or to openings of buildings, play facilities, etc.

The entire disclosure of Japanese Patent Application No. 2006-057992 filed on March 3, 2006 including specification, claims, drawings and summary is incorporated herein by reference in its entirety.

## Claims

1. A gap-filling member for vehicles to be mounted on a peripheral portion of a plate-like body for vehicle windows, to fill a gap between the plate-like body for vehicle windows and an opening of a vehicle body, said gap-filling member being made of an olefinic thermoplastic elastomer which comprises:

   an olefinic graft copolymer comprising an olefinic polymer or olefinic copolymer segment formed from an $\alpha$-

olefin monomer, and a vinyl copolymer segment, wherein particles of one segment are dispersed in the other segment, and the particles have an average diameter of from 0.01 to 1 μm; and
an acrylic rubber obtained by copolymerizing a monomer mixture comprising, as the main components, methoxyethyl acrylate, an alkyl acrylate, acrylonitrile and allyl methacrylate.

**2.** A gap-filling member for vehicles to be mounted on a peripheral portion of a plate-like body for vehicle windows, to fill a gap between the plate-like body for vehicle windows and an opening of a vehicle body, said gap-filling member being made of an olefinic thermoplastic elastomer obtained by melt-kneading:

an olefinic graft precursor of a structure wherein a copolymer of a vinyl monomer with a radical polymerizable organic peroxide is dispersed, with an average diameter of from 0.01 to 1 μm, in an olefinic polymer or olefinic copolymer formed from an α-olefin monomer;
an acrylic rubber obtained by copolymerizing a monomer mixture comprising, as the main components, methoxyethyl acrylate, an alkyl acrylate, acrylonitrile and allyl methacrylate; and
a crosslinking agent.

**3.** The gap-filling member for vehicles according to Claim 1, wherein a vinyl monomer to constitute the vinyl copolymer segment is at least one member selected from the group consisting of styrene, ethyl acrylate, butyl acrylate, methoxyethyl acrylate, acrylonitrile and hydroxypropyl (meth)acrylate.

**4.** The gap-filling member for vehicles according to Claim 1 or 2, wherein the α-olefin monomer is at least one member selected from the group consisting of ethylene, propylene, 1-butene, 1-pentene, 1-hexene and 4-methyl-1-pentene.

**5.** The gap-filling member for vehicles according to Claim 1 or 2, wherein the acryl rubber is one obtained by copolymerizing a monomer mixture comprising, as the main components, from 10 to 90 wt% of methoxyethyl acrylate, from 4 to 85 wt% of an alkyl acrylate, from 4 to 15 wt% of acrylonitrile and from 0.1 to 10 wt% of allyl methacrylate.

**6.** The gap-filling member for vehicles according to Claim 2, wherein the vinyl monomer is at least one member selected from the group consisting of styrene, ethyl acrylate, butyl acrylate, methoxyethyl acrylate, acrylonitrile and hydroxypropyl (meth)acrylate.

**7.** The gap-filling member for vehicles according to Claim 2, wherein the radical polymerizable organic peroxide is a compound of the following formula (1) or (2) :

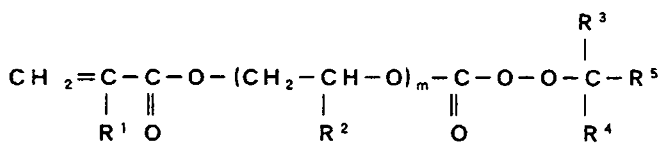

· · · (1)

wherein $R^1$ is a hydrogen atom or a $C_{1-2}$ alkyl group, $R^2$ is a hydrogen atom or a methyl group, each of $R^3$ and $R^4$ which are independent of each other, is a $C_{1-4}$ alkyl group, $R^5$ is a $C_{1-12}$ alkyl group, a phenyl group, an alkyl-substituted phenyl group or a $C_{3-12}$ cycloalkyl group, and m is 1 or 2,

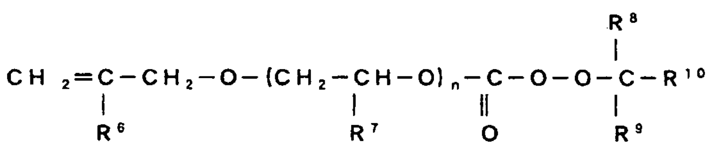

· · · (2)

wherein $R^6$ is a hydrogen atom or a $C_{1-4}$ alkyl group, $R^7$ is a hydrogen atom or a methyl group, each of $R^8$ and $R^9$ which are independent of each other, is a $C_{1-4}$ alkyl group, $R^{10}$ is a $C_{1-12}$ alkyl group, a phenyl group, an alkyl-substituted phenyl group or a $C_{3-12}$ cycloalkyl group, and n is 0, 1 or 2.

**8.** The gap-filling member for vehicles according to Claim 2, wherein the crosslinking agent is sulfur, a sulfur-containing organic compound, an amino group-containing compound, an acid anhydride group-containing compound, a carboxyl

group-containing compound, an isocyanate group-containing compound, an epoxy group-containing compound, a resin crosslinking agent or an organic peroxide.

**9.** The gap-filling member for vehicles according to any one of Claims 1 to 8, which has an initial gloss value of at least 15.

**10.** A plate-like body for vehicle windows, provided with a gap-filling member for vehicles, which has the gap-filling member for vehicles as defined in any one of Claims 1 to 9 provided on its peripheral portion.

**11.** A plate-like body for vehicle windows, provided with a gap-filling member for vehicles, which has the gap-filling member for vehicles as defined in any one of Claims 1 to 9 integrally molded on a peripheral portion of the plate-like body for vehicle windows.

**12.** The gap-filling member for vehicles according to any one of Claims 1 to 9, which is used for a window of an automobile.

Fig. 1

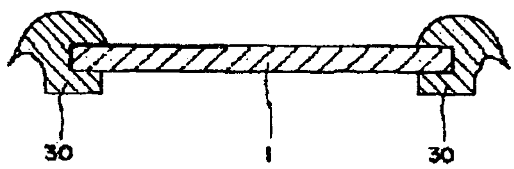


Fig. 2

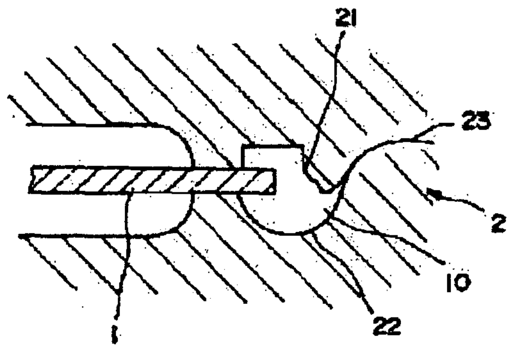

**INTERNATIONAL SEARCH REPORT**

International application No.
PCT/JP2007/054080

A. CLASSIFICATION OF SUBJECT MATTER
*B60J1/02*(2006.01)i, *B60J1/00*(2006.01)i, *B60J10/02*(2006.01)i, *C08L51/00*(2006.01)i, *C08L55/00*(2006.01)i, *C09K3/10*(2006.01)i

According to International Patent Classification (IPC) or to both national classification and IPC

B. FIELDS SEARCHED

Minimum documentation searched (classification system followed by classification symbols)
B60J1/02, B60J1/00, B60J10/02, C08L51/00, C08L55/00, C09K3/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-133024 A (Riken Technos Kabushiki Kaisha), 26 May, 2005 (26.05.05), Full text (Family: none) | 1-12 |
| A | JP 11-310654 A (Mitsui Chemicals, Inc.), 09 November, 1999 (09.11.99), Full text; Figs. 1 to 3 (Family: none) | 1-12 |
| A | JP 6-192490 A (NOF Corp.), 12 July, 1994 (12.07.94), Full text (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 May, 2007 (28.05.07) | Date of mailing of the international search report<br>05 June, 2007 (05.06.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2007/054080

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-58683 A (Nishikawa Rubber Co., Ltd.), 26 February, 2004 (26.02.04), Full text; Figs. 1 to 8 (Family: none) | 1-12 |
| A | JP 2004-2651 A (NOF Corp.), 08 January, 2004 (08.01.04), Full text & US 2005/0288434 A1 | 1-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004058683 A
- JP 2004002651 A
- JP 2006057992 A